# EUROPEAN PATENT SPECIFICATION

(11) **EP 4 321 959 B1**
(45) Date of publication and mention of the grant of the patent: **26.02.2025**
(21) Application number: 22190332.1
(22) Date of filing: 13.08.2022
(51) Int. Cl.: G05D 7/06, F04B 49/06

(54) **A FLOW CONTROL SYSTEM FOR A SYSTEM OF VALVES CONNECTED TO A SPLITTER**
DURCHFLUSSSTEUERUNGSSYSTEM FÜR EIN MIT EINEM VERTEILER VERBUNDENES SYSTEM MIT VENTILEN
SYSTÈME DE CONTRÔLE DE FLUX POUR UN SYSTÈME DE SOUPAPES CONNECTÉES À UN SÉPARATEUR

(43) Date of publication of application: 14.02.2024
(73) Proprietor: Advanced Digital Broadcast S.A., 1293 Bellevue (CH)
(72) Inventor: GASPEROWICZ, Henryk, 65-119 Zielona Gora (PL); POPIELARSKI, Damian, 65-119 Zielona Gora (PL)
(74) Representative: Kancelaria Eupatent.pl Sp. z.o.o

(56) References cited:
- WO-A1-2021/050932
- JP-A- S59 184 921
- US-A1- 2014 305 507
- US-B2- 11 340 637

## Description

### TECHNICAL FIELD

The present invention relates to flow control in a system of valves connected to a splitter.

### BACKGROUND

There are known various kinds of systems wherein a main compressor (or a pump) delivers fluid to a splitter that supplies the fluid to a plurality of outlets, wherein the flow of fluid at each outlet is controlled by a dedicated outlet valve. For example, such systems are used in climate control (wherein the fluid is air, and the outlets are air supply units to various rooms in a building).

In a basic scenario, the main compressor may operate at its maximum efficiency to deliver fluid with its full power, wherein the dedicated outlet valves control the rate of fluid delivery to each outlet. This scenario is ineffective, because if the amount of fluid discharged at all the outlets is lower than the compression efficiency, pressure is built inside the system which causes load to system components and decreases its lifetime.

Alternatively, it is known to optimize the workload to the system by continuously adjusting the efficiency of the compressor so as to deliver, by the compressor, the fluid in the amount corresponding to the cumulative outlet demand from all outlets. However, this approach has the drawback that a feedback loop that adjusts the efficiency has some delay, therefore it is possible that such optimized system will not react quickly enough if a demand for the fluid increases quickly.

For example a US patent document US11340637B2 discloses a fluid distribution system comprising connected conduits such as pipes within a building wherein fluid flows through the conduits. The conduits may be configured to: (i) include multiple lines that connect at intersections (some of the intersections will be identified as nodes); and (ii) incorporate node units associated with line pressure loss simulation assemblies ("LLSAs"). Activities of a node unit incorporating a LLSA can result in alterations in fluid pressure, such as by a loop control process to reposition balancing valves or other valves of one or more LLSAs, and/or by alteration of the speed of the system pump. These activities adjust fluid pressure to cause the system to produce a balanced and high efficiency energy transfer (e.g., heating or cooling), and do not involve or require any identification or use of any specific, fixed or absolute pressure value. They function based on an operation locus (for a node unit) and/or an operation locus range (for node unit groupings) to adjust the fluid pressure.

For example a US patent application US2014305507A1 discloses a self-organizing multi-stream flow delivery process wherein enabling actuation and control are introduced. The method and apparatus of building a general-purpose self-organizing multi-stream flow delivery process are presented. The flow delivery process comprises a number of flow streams, each of which is regulated by a flow valve. A pressure valve is added onto the main flow line to "choke" the pressure to allow the flow control valves to work in their relatively linear ranges so that they can regulate the flows adequately.

For example a Japanese patent application JPS59184921A discloses a method and a device for controlling fluid pressure, wherein the fluid is supplied with high efficiency by selecting the proper pressure in accordance with the switching states of valves provided to plural branch pipes of a main pipe and controlling the number of revolutions of a pump motor based on the deviation between said proper pressure and the pressure generated actually.

For example an international patent application WO2021050932A1 relates to pumping and water distribution systems for pools/spas, and methods for control thereof. A system includes a pump including a variable speed motor, a controller configured to control the speed of the motor, a plurality of pool/spa components, a plumbing subsystem placing the components in fluidic communication with the pump, and a plurality of control valves switchable between an open position and a closed position. Each of the control valves is associated with one of the components, positioned in the plumbing subsystem between the associated component and the pump to control the flow of fluid to the associated component, and is configured to provide a specific flow rate of fluid to the associated component based on a set system pressure when in the open position. The controller adjusts the speed of the motor to adjust the fluid pressure within the plumbing subsystem to match the set system pressure value.

### SUMMARY OF THE INVENTION

Therefore, there is a need to provide an alternative method for flow control in a system of valves connected to a splitter which will be devoid of at least some of the disadvantages discussed above.

The object of the invention is a system according to the appended claims.

The main system controller can be configured to initially set the main pressure setpoint at a middle of the range of values and perform a re-adjustment of the main pressure setpoint when that largest opening angle of the valves moves beyond the range of values.

The flow controllers and/or the main flow controller can be proportional-integral-derivative controllers.

The system according to the invention operates such as to maintain the opening angle of the widest open valve at a value or range indicated by the valve opening setpoint. Consequently, the pressurizer operates at an optimal efficiency - its operating efficiency is decreased when the demand for fluid is low and increased when the demand is high. The pressure within the separator is kept at relatively low level. Since the widest open valve is never fully open (i.e. the valve opening setpoint is lower than 100%, preferably between 80% and 90%), there is some pressure heat to quickly compensate for the small increasing demand. Moreover, if the demand for fluid at one of the outlets suddenly increases, the internal fluid pressure at the separator can quickly compensate the increasing demand (while the power of the pressurizer will be increased subsequently), so the system is rapidly responsive to variations in demand for fluid at the outlets.

The invention is applicable to various kinds of systems with valves, such as systems for climate control (wherein the fluid is air and the outlets are air supply units to various rooms in a building), for fuel burning, for drying, for chemical processing, for air circulation, for conveying.

Further aspects and features of the present invention are described in following description of the drawings.

### BRIEF DESCRIPTION OF DRAWINGS

Aspects and features of the present invention will become apparent by describing, in detail, exemplary embodiment of the present invention with reference to the attached drawing, wherein:
Fig. 1 shows an example of a system structure;
Fig. 2 shows an exemplary compressor efficiency map.

### DETAILED DESCRIPTION

Reference will now be made to an embodiment of the system. Aspects and features of the embodiment will be described with reference to the accompanying drawing. The present invention, however, may be embodied in various different forms and should not be construed as being limited only to the illustrated embodiment. Rather, these embodiment is provided as an example so that this disclosure will be thorough and complete, and will fully convey the aspects and features of the present invention to those skilled in the art. It shall be understood that not all of the features shown in the embodiment are essential and the scope of the protection is defined not by means of literally shown embodiment, but by the features provided in the claims.

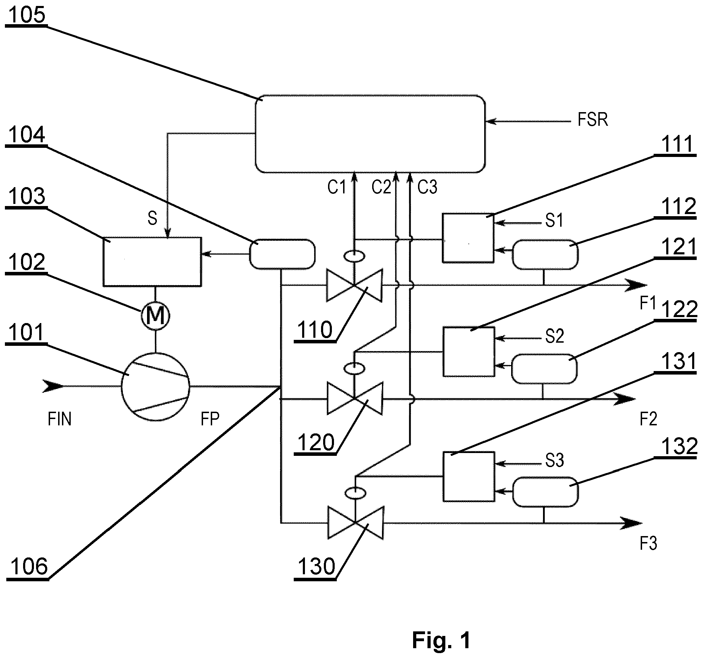

The system as shown in Fig. 1 comprises a main pressurizer 101 (i.e. a compressor if the fluid is a gas or a pump if the fluid is a liquid) that is configured to compress an input flux FIN of fluid to a pressurized flux FP to be delivered to a splitter 106 that distributes the pressurized flux FP to a plurality of valves 110, 120, 130. The efficiency of the pressurizer 101 is controlled by controlling the power of the motor 102 that drives the pressurizer 101. The motor power is controlled by a main flow controller 103, preferably a PID (proportional-integral-derivative) controller, that adjusts the operation of the motor 102 such that the pressure of the pressurized flux FP measured by a main pressure sensor 104 is substantially equal to a main pressure setpoint S output from a main system controller 105. The use of the PID controller has the advantages that it is commonly used and well known, therefore it can be easily adapted to the system.

Each valve 110, 120, 130 is controlled by its dedicated flow controller 111, 121, 131, preferably a PID controller. The flow controllers 111, 121, 131 adjust the opening angle of the valve such that the flow measured by the dedicated outlet flow sensors 112, 122, 132 is equal to an outlet setpoint S1, S2, S3 adjusted by the user. For example, the outlet setpoint S1, S2, S3 may be adjusted by a manual controller (e.g. a mechanic knob or electronic adjuster) or an automated controller (e.g. outlet from an automated climate control system). The control signals C1, C2, C3 that set the opening angle of individual valves 110, 120, 130 are input to the corresponding valves 110, 120, 130 and to the main system controller 105.

The main system controller 105 is configured to set the main pressure setpoint S such as to set the valve 110, 120, 130 that operates at the largest opening angle (wherein the opening angle is determined based on the control signals C1, C2, C3) to opening angle defined by a valve opening setpoint FS. The valve opening setpoint FS can be a predefined constant set for the particular system or can be input to the main system controller 105 as a control variable set by a manual or automated controller. For example, the valve opening setpoint FS can define a value of 85%.

Alternatively, the valve opening setpoint FS can define a range of values, for example between 80% and 90%. In that case, the main system controller 105 may be configured to initially set the main pressure setpoint S such that the largest opening angle of the valves is in the middle of the range (e.g. 85% when the range is from 80% to 90%) and perform a re-adjustment of the main pressure setpoint S when that largest opening angle moves beyond the range (e.g. if it falls below 80% or rises above 90%). This reduces the amount of control operations and keeps a more stable point of operation of the motor 102.

The main system controller 105 may set the main pressure setpoint S using various methods. For example, it may comprise one or more tables that include values of main pressure setpoint S to be set depending on the control signals C1, C2, C3. Alternatively, it may operate according to some function based on the control signals C1, C2, C3. Alternatively, it may operate in a feedback loop such as to increase the main pressure setpoint S if one of the control signal C1, C2, C3 indicates a valve opening value higher than the valve opening setpoint FS (or its value is above the upper limit of a range) and to decrease the main pressure setpoint S if one of the control signal C1, C2, C3 indicates a valve opening value lower than the valve opening setpoint FS (or its value is below the lower limit of a range).

### Example of system operation

The pressurizer 101 is selected such that it can deliver pressurized fluid FP at a rate such that outlet setpoints S1, S2, S3 can be set to 100% so that the fluid can flow to the outlets at 100% of desired flowrate from each outlet. The valve opening setpoint range FSR is defined to a range of 80% to 90%, i.e. the middle of the range is 85%.

Let's assume that a user of the system adjusts the outlet setpoint S1 to 70% of maximum possible flow, the outlet setpoint S2 to 40% and the outlet setpoint S3 to 30%. In that case the cumulative demand from all outlets is (70%+40%+30%)/3 = 47% of the possible maximum demand. If the first valve 111 is to be opened at 100%, the pump motor 102 would have to be set to a 47% efficiency. However, since the FS is set to 85%, the pump motor 102 efficiency shall be increased by 100-100/85 = 18%, i.e. from 47% to 65%. Then, if the pump motor 102 efficiency is set to 65%, the opening angle of the first valve 110 will be set to 85%, the opening angle of the second valve 120 will be set to 85*40/70 = 49% and the opening angle of the third valve 130 will be set to 85*30/70=36%.

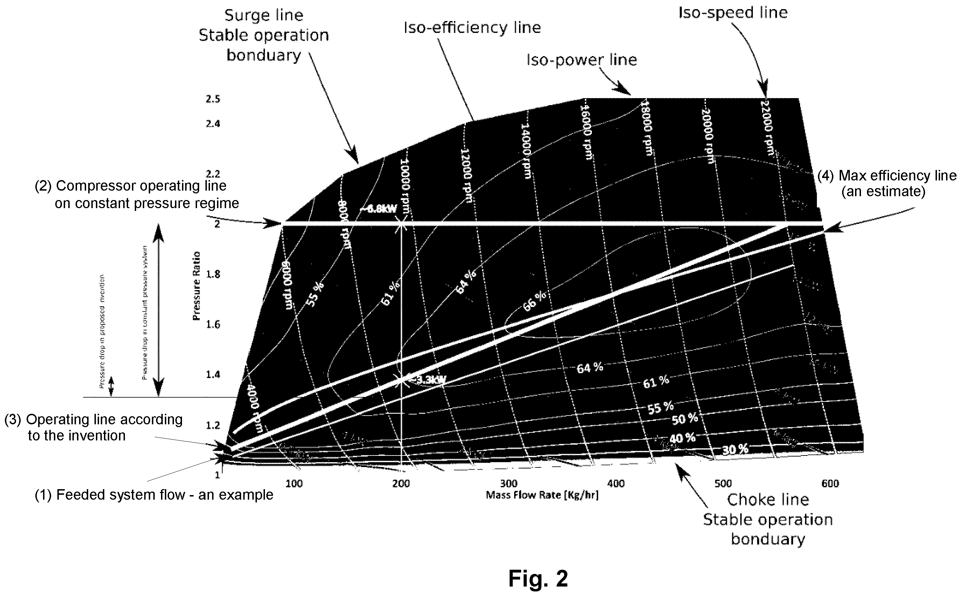

Fig. 2 shows a TVS R410 EATON compressor efficiency map. Let's assume an exemplary operating point with an air flow equal to 200 kg/h and with an air pressure at the inlet equal to 1 bar.

A first curve (1) (magenta color) on the map is a pressure-flow curve of an exemplary air-fed system.

A second curve (2) (red color) fixed at 2 bars presents an example of the compressor operation without implementing the presented invention (flow regulation) then the compressor is controlled to maintain "constant pressure". At the considered operating point, the compressor works with the power of ~ 6.8kW to generate the desired flow and pressure difference.

A third curve (3) (yellow color) presents the compressor operation with the control proposed by the present invention. For small flows, the energy gain is significant. A fourth curve (4) (green color) presents an operation of a perfectly matched compressor and is added as a reference goal of the system operation.

As the presented algorithm aims to reduce the pressure loss (the control valves are opened at 85-90%), the invention causes that the operating point lies at a much lower operating pressure than the one presented by the red curve.

The compressor in the example is a positive displacement machine. In such machines the flow is not that significantly dependent on the degree of compression but is strongly related to the rotational speed. After implementing the present solution it is possible to decrease the rotational speed from about 9500 RPM to 8500 RPM. However for the machines operating on a dynamic principle (for example such as a fan) the difference in rotational speed will be more significant.

Operation without maximum pressure limitation (at constant speed) for low flows will cause the compressor to operate with a very high compression ratio.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A fluid distribution system comprising a system of valves (110, 120, 130) connected to a splitter (106) wherein a pressurized fluid (FP) is supplied to the splitter (106) by a pressurizer (101) driven by a motor (102), and a flow control system for controlling flow in the system of valves (110, 120, 130), the fluid distribution system further comprising:
- a plurality of flow sensors (112, 122, 132), each flow sensor (112, 122, 132) being respectively connected individually at an output of a separate one of the valves (110, 120, 130) to measure output flow from that particular valve (110, 120, 130);
- a plurality of flow controllers (111, 121, 131), each flow controller being respectively connected individually to a separate one of the valves (110, 120, 130) configured to output a control signal (C1, C2, C3) to control an opening angle of that particular valve (110, 120, 130) in response to an output from a flow sensor (112, 122, 132) connected at the output of that particular valve (110, 120, 130) and an outlet setpoint (S1, S2, S3) provided for that particular valve (110, 120, 130);
**characterized in that** it further comprises:
- a main pressure sensor (104) configured to measure pressure of fluid (FP) output from the pressurizer (101);
- a main flow controller (103) configured to adjust operation of the motor (102) driving the pressurizer (101) such that the pressure of the pressurized flux (FP) measured by the main pressure sensor (104) is equal to a main pressure setpoint (S);
- a main system controller (105) configured to set the main pressure setpoint (S) based on the control signals (C1, C2, C3) such as to set the valve (110, 120, 130) that operates at the largest opening angle to an opening angle defined by a valve opening setpoint (FS) that is a value lower than 100% of the valve maximum possible flow.

2. The system according to claim 1, wherein the pressurizer (101) is a compressor and the input fluid (FIN) is a gas.

3. The system according to claim 1, wherein the pressurizer (101) is a pump and the input fluid (FIN) is a liquid.

4. The system according to any of previous claims, wherein the valve opening setpoint (FS) is a value.

5. The system according to any of previous claims, wherein the valve operating setpoint (FS) is lower than 100%, or lower than 95%, or lower than 90%, or lower than 85%, or lower than 80% of the valve maximum possible flow.

6. The system according to claim 5, wherein the valve operating setpoint (FS) is higher than 50%, or higher than 60%, or higher than 70%, or higher than 80%, or higher than 85%, or higher than 90% of the valve maximum possible flow.

7. The system according to any of claims 1-3, wherein the valve opening setpoint (FS) is a value from a range of values.

8. The system according to claim 7, wherein the upper limit of the valve operating setpoint (FS) range is lower than 100%, or lower than 95%, or lower than 90%, or lower than 85%, or lower than 80% of the valve maximum possible flow.

9. The system according to claim 8, wherein the lower limit of the valve operating setpoint (FS) range is higher than 50%, or higher than 60%, or higher than 70%, or higher than 80%, or higher than 85%, or higher than 90% of the valve maximum possible flow.

10. The system according to any of claims 7-9, wherein the main system controller (105) is configured to initially set the main pressure setpoint (S) at a middle of the range of values and perform a re-adjustment of the main pressure setpoint (S) when that largest opening angle of the valves (110, 120, 130) moves beyond the range of values.

11. The system according to any of previous claims, wherein the flow controllers (111, 121, 131) and/or the main flow controller (103) are proportional-integral-derivative controllers.

## Patentansprüche

1. Fluiddistributionssystem, umfassend ein System von Ventilen (110, 120, 130), die mit einem Verteiler (106) verbunden sind, wobei ein unter Druck stehendes Fluid (FP) dem Verteiler (106) durch einen Druckerzeuger (101) zugeführt wird, der durch einen Motor (102) angetrieben wird, und ein Durchflusssteuerungssystem zum Steuern von Durchfluss in dem System von Ventilen (110, 120, 130), wobei das Fluiddistributionssystem ferner Folgendes umfasst:
- eine Vielzahl von Durchflusssensoren (112, 122, 132), wobei jeder Durchflusssensor (112, 122, 132) jeweils einzeln an einem Ausgang eines separaten der Ventile (110, 120, 130) verbunden ist, um Ausgangsdurchfluss von diesem bestimmten Ventil (110, 120, 130) zu messen;
- eine Vielzahl von Durchflusssteuerungen (111, 121, 131), wobei jede Durchflusssteuerung jeweils einzeln mit einem separaten der Ventile (110, 120, 130) verbunden ist, das konfiguriert ist, um ein Steuersignal (C1, C2, C3) auszugeben, um einen Öffnungswinkel dieses bestimmten Ventils (110, 120, 130) als Reaktion auf einen Ausgang von einem Durchflusssensor (112, 122, 132), der an dem Ausgang dieses bestimmten Ventils (110, 120, 130) verbunden ist, und einen Auslasssollwert (S1, S2, S3), der für dieses bestimmte Ventil (110, 120, 130) bereitgestellt ist, zu steuern;
**dadurch gekennzeichnet, dass** es ferner Folgendes umfasst:
- einen Hauptdrucksensor (104), der konfiguriert ist, um Druck von Fluid (FP) zu messen, das von dem Druckerzeuger (101) ausgegeben wird;
- eine Hauptdurchflusssteuerung (103), die konfiguriert ist, um Betrieb des Motors (102), der den Druckerzeuger (101) antreibt, einzustellen, sodass der Druck des unter Druck stehenden Flusses (FP), der durch den Hauptdrucksensor (104) gemessen wird, gleich einem Hauptdrucksollwert (S) ist;
- eine Hauptsystemsteuerung (105), die konfiguriert ist, um den Hauptdrucksollwert (S) basierend auf den Steuersignalen (C1, C2, C3) festzulegen, um das Ventil (110, 120, 130), das mit dem größten Öffnungswinkel arbeitet, auf einen Öffnungswinkel festzulegen, der durch einen Ventilöffnungssollwert (FS) definiert ist, der ein Wert kleiner als 100 % des maximal möglichen Ventildurchflusses ist.

2. System nach Anspruch 1, wobei der Druckerzeuger (101) ein Kompressor ist und das Eingangsfluid (FIN) ein Gas ist.

3. System nach Anspruch 1, wobei der Druckerzeuger (101) eine Pumpe ist und das Eingangsfluid (FIN) eine Flüssigkeit ist.

4. System nach einem der vorhergehenden Ansprüche, wobei der Ventilöffnungssollwert (FS) ein Wert ist.

5. System nach einem der vorhergehenden Ansprüche, wobei der Ventilbetriebssollwert (FS) kleiner als 100 % oder kleiner als 95 % oder kleiner als 90 % oder kleiner als 85 % oder kleiner als 80 % des maximal möglichen Ventildurchflusses ist.

6. System nach Anspruch 5, wobei der Ventilbetriebssollwert (FS) höher als 50 % oder höher als 60 % oder höher als 70 % oder höher als 80 % oder höher als 85 % oder höher als 90 % des maximal möglichen Ventildurchflusses ist.

7. System nach einem der Ansprüche 1-3, wobei der Ventilöffnungssollwert (FS) ein Wert aus einem Bereich von Werten ist.

8. System nach Anspruch 7, wobei der Bereich der Obergrenze des Ventilbetriebssollwertes (FS) kleiner als 100 % oder kleiner als 95 % oder kleiner als 90 % oder kleiner als 85 % oder kleiner als 80 % des maximal möglichen Ventildurchflusses ist.

9. System nach Anspruch 8, wobei der Bereich der Untergrenze des Ventilbetriebssollwertes (FS) höher als 50 % oder höher als 60 % oder höher als 70 % oder höher als 80 % oder höher als 85 % oder höher als 90 % des maximal möglichen Ventildurchflusses ist.

10. System nach einem der Ansprüche 7-9, wobei die Hauptsystemsteuerung (105) konfiguriert ist, um den Hauptdrucksollwert (S) anfänglich auf eine Mitte des Bereichs von Werten festzulegen und eine Neueinstellung des Hauptdrucksollwertes (S) durchzuführen, wenn sich dieser größte Öffnungswinkel der Ventile (110, 120, 130) über den Bereich von Werten hinaus bewegt.

11. System nach einem der vorhergehenden Ansprüche, wobei die Durchflusssteuerungen (111, 121, 131) und/oder die Hauptdurchflusssteuerung (103) Proportional-Integral-Derivat-Steuerungen sind.

## Revendications

1. Système de distribution de fluide comprenant un système de soupapes (110, 120, 130) connecté à un séparateur (106), un fluide sous pression (FP) étant fourni au séparateur (106) par un dispositif de mise sous pression (101) entraîné par un moteur (102), et un système de contrôle de flux destiné à commander le flux dans le système de soupapes (110, 120, 130), le système de distribution de fluide comprenant en outre :
- une pluralité de capteurs de flux (112, 122, 132), chaque capteur de flux (112, 122, 132) étant respectivement connecté individuellement à une sortie d'une soupape séparée parmi les soupapes (110, 120, 130) pour mesurer le flux de sortie de cette soupape particulière (110, 120, 130) ;
- une pluralité de dispositifs de contrôle de flux (111, 121, 131), chaque dispositif de contrôle de flux étant respectivement connecté individuellement à une soupape séparée parmi les soupapes (110, 120, 130) conçues pour émettre un signal de commande (C1, C2, C3) pour commander un angle d'ouverture de cette soupape particulière (110, 120, 130) en réponse à une sortie d'un capteur de flux (112, 122, 132) connecté au niveau de la sortie de cette soupape particulière (110, 120, 130) et à une valeur de consigne de sortie (S1, S2, S3) prévue pour cette soupape particulière (110, 120, 130) ;
**caractérisé en ce qu'**il comprend en outre :
- un capteur de pression principal (104) conçu pour mesurer la pression du fluide (FP) délivrée en sortie du dispositif de mise sous pression (101) ;
- un dispositif de contrôle de flux principal (103) conçu pour ajuster le fonctionnement du moteur (102) entraînant le dispositif de mise sous pression (101) de sorte que la pression du flux sous pression (FP) mesurée par le capteur de pression principal (104) soit égale à une valeur de consigne de pression principale (S) ;
- un dispositif de contrôle de système principal (105) conçu pour régler la valeur de consigne de pression principal (S) sur la base des signaux de commande (C1, C2, C3) de manière à régler la soupape (110, 120, 130) qui fonctionne à l'angle d'ouverture le plus grand à un angle d'ouverture défini par une valeur de consigne d'ouverture de soupape (FS) qui est une valeur inférieure à 100 % du flux maximal possible de soupape.

2. Système selon la revendication 1, ledit dispositif de mise sous pression (101) étant un compresseur et ledit fluide d'entrée (FIN) étant un gaz.

3. Système selon la revendication 1, ledit dispositif de mise sous pression (101) étant une pompe et ledit fluide d'entrée (FIN) étant un liquide.

4. Système selon l'une quelconque des revendications précédentes, ledit point de consigne d'ouverture de soupape (FS) étant une valeur.

5. Système selon l'une quelconque des revendications précédentes, ladite valeur de consigne de fonctionnement (FS) de soupape étant inférieure à 100 %, ou inférieure à 95 %, ou inférieure à 90 %, ou inférieure à 85 %, ou inférieure à 80 % du flux maximal possible de soupape.

6. Système selon la revendication 5, ladite valeur de consigne de fonctionnement (FS) de soupape étant supérieure à 50 %, ou supérieure à 60 %, ou supérieure à 70 %, ou supérieure à 80 %, ou supérieure à 85 %, ou supérieure à 90 % du flux maximal possible de soupape.

7. Système selon l'une quelconque des revendications 1-3, ladite valeur de consigne d'ouverture (FS) de soupape étant une valeur provenant d'une plage de valeurs.

8. Système selon la revendication 7, ladite limite supérieure de la plage de valeurs de consigne de fonctionnement (FS) de soupape étant inférieure à 100 %, ou inférieure à 95 %, ou inférieure à 90 %, ou inférieure à 85 %, ou inférieure à 80 % du flux maximal possible de soupape.

9. Système selon la revendication 8, ladite limite inférieure de la plage de valeurs de consigne de fonctionnement (FS) de soupape étant supérieure à 50 %, ou supérieure à 60 %, ou supérieure à 70 %, ou supérieure à 80 %, ou supérieure à 85 %, ou supérieure à 90 % du flux maximal possible de soupape.

10. Système selon l'une quelconque des revendications 7-9, ledit dispositif de contrôle de système principal (105) étant conçu pour régler initialement la valeur de consigne de pression principal (S) au milieu de la plage de valeurs et pour réaliser un réajustement de la valeur de consigne de pression principal (S) lorsque le plus grand angle d'ouverture des soupapes (110, 120, 130) se déplace au-delà de la plage de valeurs.

11. Système selon l'une quelconque des revendications précédentes, lesdits dispositifs de contrôle de flux (111, 121, 131) et/ou ledit dispositif de contrôle de flux principal (103) étant des dispositifs de contrôle proportionnels-intégraux-dérivés.
